# EUROPÄISCHE PATENTSCHRIFT

(11) **EP 0 829 393 B1**
(45) Veröffentlichungstag und Bekanntmachung des Hinweises auf die Patenterteilung: **15.03.2000**
(21) Anmeldenummer: 97115160.0
(22) Anmeldetag: 02.09.1997
(51) Int. Cl.: B60R 13/02

(54) **Brüstungsleiste**
Wall panel
Panneau mur

(30) Priorität: 13.09.1996 DE 19637303
(43) Veröffentlichungstag der Anmeldung: 18.03.1998
(73) Patentinhaber: HAPPICH Fahrzeug- und Industrieteile GmbH, 42285 Wuppertal (DE)
(72) Erfinder: Marcus, Armin, 42111 Wuppertal (DE); Gebel, Thomas, 42111 Wuppertal (DE)

(56) Entgegenhaltungen:
- EP-A- 0 201 384
- EP-A- 0 289 848
- EP-A- 0 553 639
- US-A- 4 465 205

## Beschreibung

Die Erfindung bezieht sich auf eine Brüstungsleiste für den Innenraumbereich von Großraumfahrzeugen, insbesondere Omnibussen, die sich längs eines die untere Begrenzung der Fensteröffnungen des Fahrzeugs bildenden Holms erstreckt und dabei den Holm, an dem sie über Haltemittel festgelegt ist, mit einem horizontal ausgerichteten Schenkel und einem vertikal ausgerichteten Schenkel übergreift.

Bei der Innenraumgestaltung von Omnibussen oder anderen Großraumfahrzeugen kann die spätere Abnehmerschaft verständlicherweise nur geringen Einfluß auf die Ausrüstungsdetails nehmen. Zu diesen Ausrüstungsdetails gehören auch die Brüstungsleisten, bei deren Ausbildung mehr auf technische als auf ästhetische Gesichtspunkte Wert gelegt wird. Im allgemeinen werden standardisierte Brüstungsleisten verbaut, deren Design aber oftmals nicht mit den Vorstellungen der Abnehmerschaft übereinstimmt. Bisher hat man in den Fällen, in denen der Kunde für eine Brüstungsleiste eine andere Farbe oder ein anderes Dekor wünschte, die ursprünglich verbaute Brüstungsleiste demontiert und durch eine neu angefertigte Brüstungsleiste ersetzt. Solche Maßnahmen sind natürlich nicht populär, weil sie mit einem erheblichen Montage- und Kostenaufwand verbunden sind.

Der vorliegenden Erfindung liegt daher die Aufgabe zugrunde eine Brüstungsleiste der eingangs genannten Art zu schaffen, die sich hinsichtlich farblicher Gestaltung und Dekor weitgehend den jeweiligen Kundenwünschen anpassen läßt.

Zur Lösung dieser Aufgabe ist erfindungsgemäß vorgesehen, daß einer der Schenkel, vornehmlich der vertikal ausgerichtete Schenkel, mit einer längs durchlaufenden Schwächungszone ausgebildet und längs dieser Schwächungszone teilbar ist, um ein Entfernen eines Schenkelteilbereichs und den Ersatz dieses Schenkelbereichs durch eine Zusatzprofilleiste zu ermöglichen.

Die erfindungsgemäße Brüstungsleiste ist zunächst ein in der Herstellung preiswertes Standardprofil, das den Kundenanforderungen in der Regel entspricht. Sollte jedoch ein Busunternehmen seine Busflotte im Innenraumbereich mit z. B. Holzdekor aufgewertet haben und eine solche Aufwertung auch für die Brüstungsleisten wünschen, kann dem durch die erfindungsgemäßen Maßnahmen entsprochen werden. Hierfür wird dann ein Teil der verbauten Brüstungsleiste vom Standard-Profil entfernt und durch eine Zusatzprofilleiste, die in diesem Fall ein Holzdekor aufweist, ersetzt. Durch die Zusatzprofilleiste kann der ästhetische Gesamteindruck der Brüstungsleiste derart beeinflußt werden, daß im Regelfall nicht mehr die Demontage der kompletten Brüstungsleiste und deren kompletter Ersatz verlangt werden wird. Natürlich kann an der Brüstungsleiste die Schwächungszone so positioniert werden, daß sich ein wesentlicher Bereich entfernen und durch eine Zusatzprofilleiste ersetzen läßt.

Zweckmäßige Weiterbildungen und vorteilhafte Ausgestaltungen der Erfindung sind in den Ansprüchen 2 bis 9 angegeben.

Die Aufgabe kann nach einem anderen Lösungsprinzip erfindungsgemäß auch dadurch verwirklicht werden, daß der vertikal ausgerichtete Schenkel aus einem Grundprofil und einer daran austauschbar angeordneten Zusatzprofilleiste besteht.

Bei dieser erfindungsgemäßen Maßnahme wird von einem von Hause aus zweiteiligen Profil ausgegangen, dessen einer, überwiegend Dekorzwecken dienender Profilteil nach Belieben austauschbar ist.

Ausführungsbeispiele der Erfindung werden im folgenden anhand der Zeichnungen näher erläutert, und es zeigen
- Fig. 1: eine erste Ausführungsform der Brüstungsleiste,
- Fig. 2: die Brüstungsleiste nach Fig. 1 mit der ergänzenden Zusatzprofilleiste,
- Fig. 3: eine zweite Ausführungsform der Brüstungsleiste und
- Fig. 4: die Brüstungsleiste nach Fig. 3 mit der ergänzenden Zusatzprofilleiste.

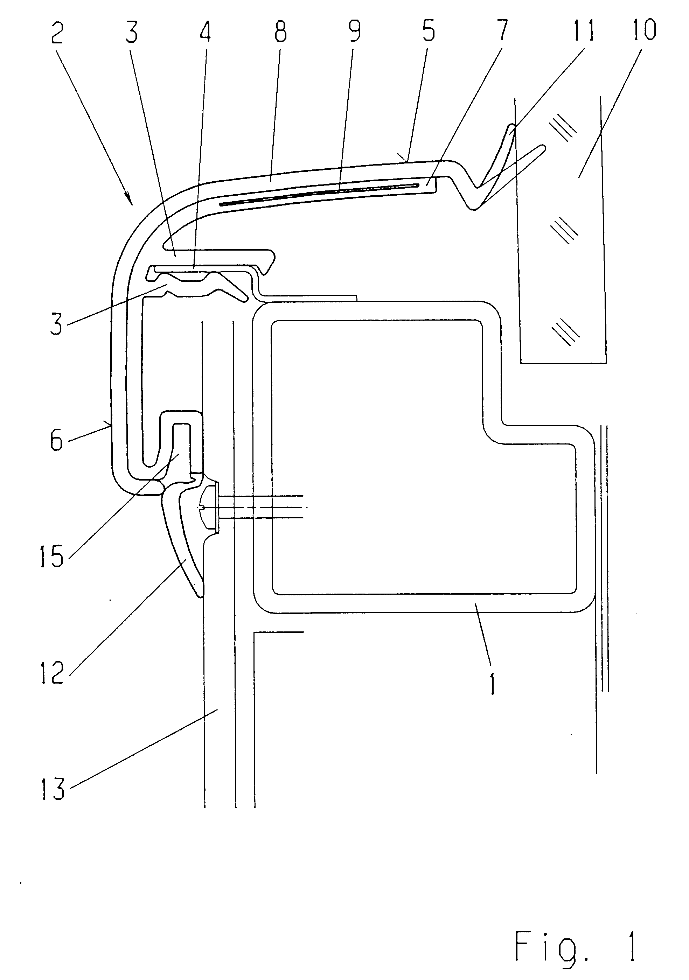

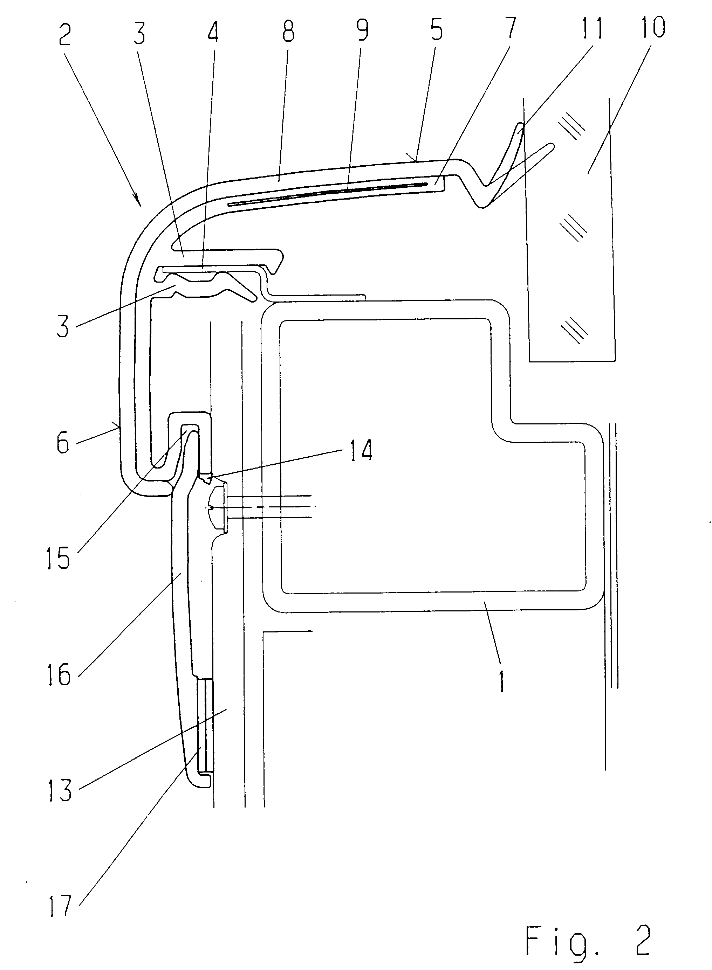

Fig. 1 und 2 zeigen den Fensterbrüstungsbereich eines Omnibusses mit einem sich durch das Fahrzeug in horizontaler Ausrichtung erstreckenden Holm 1. An den Holm 1, der die untere Begrenzung der Fensteröffnungen bildet, ist die neue Brüstungsleiste 2 festgelegt. Im Beispiel nach Fig. 1 und 2 erfolgt die Festlegung durch rückseitig an der Brüstungsleiste 2 angeformte Stege 3, die ein am Holm 1 angeordnetes Befestigungselement 4 klemmen und klipsartig übergreifen. Die Brüstungsleiste 2 übergreift den Holm 1 mit einem horizontal ausgerichteten Schenkel 5 und mit einem vertikal ausgerichteten Schenkel 6.

Die Brüstungsleiste 2 besteht zweckmäßigerweise aus Kunststoff und weist ein relativ hartes, formstabiles Innenteil 7 und ein relativ weiches, z. B. aus einer Schaumfolie gebildetes Außenteil 8 auf. Aufgrund des hohen linearen thermischen Ausdehnungskoeffizienten der üblichen Kunststoffmaterialien, der bei den üblicherweise in Fahrzeugen auftretenden Temperaturdifferenzen je nach Länge der Brüstungsleiste eine beträchtliche Längenveränderung gegenüber dem Holm 1 verursachen kann, empfiehlt es sich, im Innenteil 7 der Brüstungsleiste eine Schrumpfbremse 9 einzulagern, die aus einem Metallband, aus Glasfasern oder einer Füllmasse mit geringem thermischen Ausdehnungsvermögen bestehen kann. Hierdurch kann die lineare Ausdehnung der Brüstungsleiste 2 bei Temperaturänderungen klein gehalten werden.

Die Brüstungsleiste 2 ist nach Art eines Winkelprofils ausgebildet. Dabei besitzt der freie Längsrand des Schenkels 5 eine am Außenteil 8 angeformte, sich an den Busscheiben 10 abstützende Dichtlippe 11. Am freien Längskantenbereich des Schenkels 6 ist eine einstückig mit dem Innenteil 7 ausgebildete Anlagelippe 12 angeformt, die sich an einer Innenverkleidung 13 des Omnibusses abstützt. Die Anlagelippe 12 ist über eine Schwächungszone 14, die hier als durchlaufende Kerbe an der Wurzel der Anlagelippe 12 ausgebildet ist, am Schenkel 6 des Innenteils 7 angebunden. Der Schenkel 6 weist am Innenteil 7 weiterhin eine der Schwächungszone 14 benachbarte Längsnut 15 auf, die im Normalfall, vgl. Fig. 1, durch die Anlagelippe 12 abgedeckt ist.

Soll nun die Brüstungsleiste 2 eine dekorative Aufwertung erfahren, wird dies durch ein Abtrennen der Anlagelippe 12 vom Grundprofil und weiterhin dadurch ermöglicht, daß die Anlagelippe 12 durch eine Zusatzprofilleiste 16 ersetzt wird. Die Schwächungszone 14 erlaubt es, die Anlagelippe 12 von der Innenverkleidung 13 abzuheben, so daß die Schwächungszone 14 mittels eines skalpellartigen Schneidwerkzeugs durchtrennt oder zumindest soweit eingeschnitten werden kann, daß sich die Anlagelippe 12 vom Grundprofil abreißen läßt. Nach dem Entfernen der Anlagelippe 12 ist die Längsnut 15 freigelegt und kann zur Aufnahme und Festlegung eines Längskantenbereichs der Zusatzprofilleiste 16 genutzt werden. Die Festlegung des anderen Längskantenbereichs der Zusatzprofilleiste 16 kann z. B. über ein Klettband 17 an der Innenverkleidung 13 erfolgen.

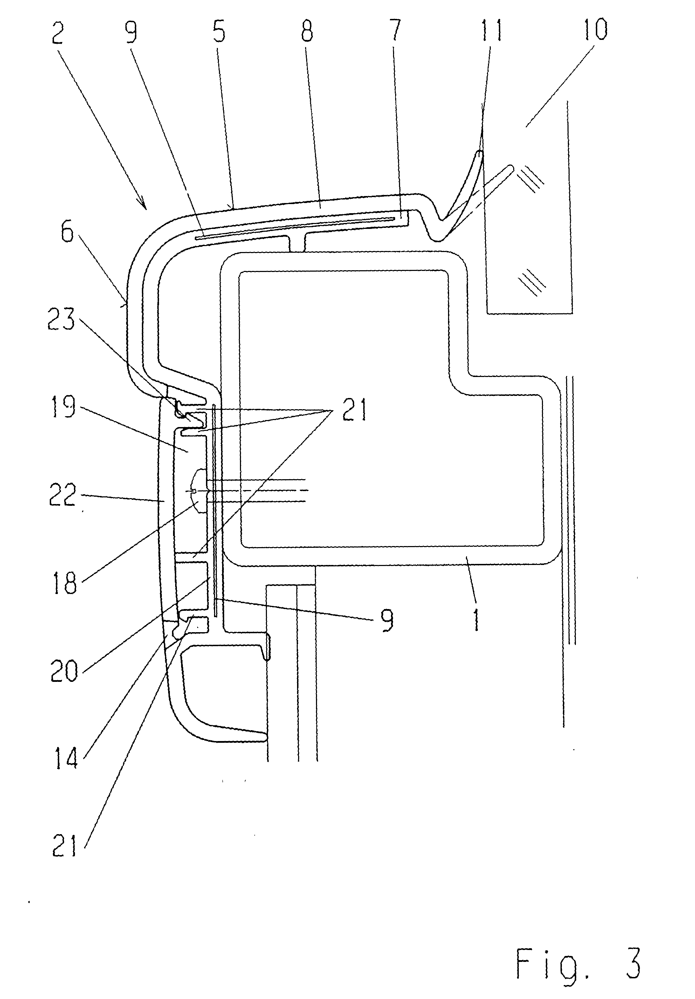

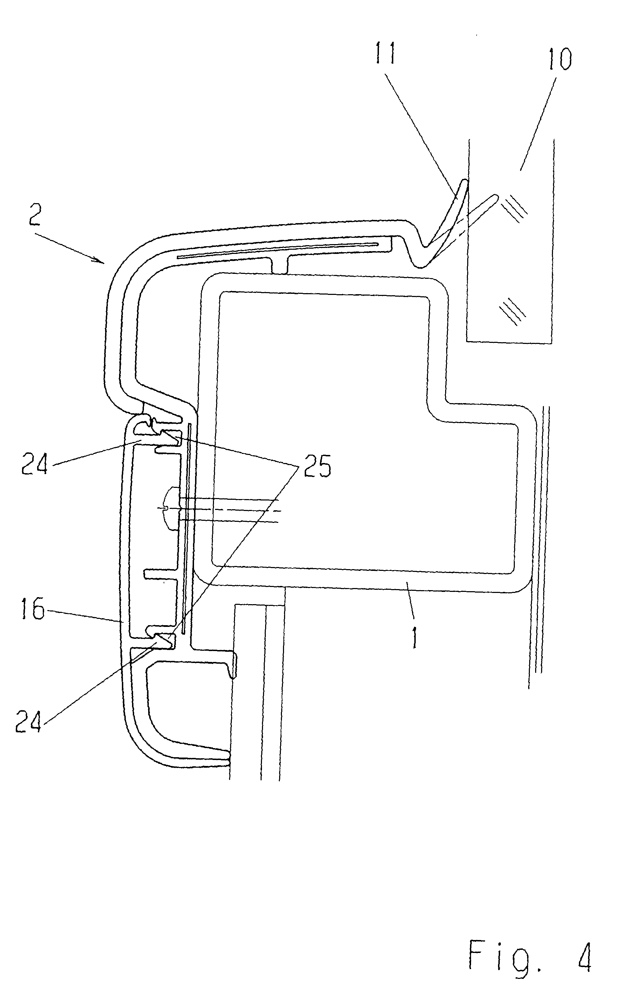

Die Zusatzprofilleiste 16 kann aus Leichtmetall oder Kunststoff bestehen, wobei sich im letzteren Fall wieder die Einlagerung einer Schrumpfbremse 9 empfiehlt. Es versteht sich, daß die Zusatzprofilleiste 16 sich ohne besonderen Aufwand den Kundenwünschen entsprechend gestalten läßt und vorderseitig mit Textilmaterial, Leder oder einem beliebigen Holzdekor kaschiert sein kann. Es ist sogar möglich eine Zusatzprofilleiste 16 einzusetzen, die aus Massivholz besteht oder ein Holzfurnier trägt. Natürlich läßt sich auch die Breite der Zusatzprofilleiste 16 ohne Probleme den Kundenwünschen anpassen. Die in Fig. 3 und 4 gezeigte Brüstungsleiste 2 besteht wiederum aus einem Winkelprofil und ist an einem Holm 1 des Fahrzeugaufbaus festgelegt, und zwar hier mittels in den Holm 1 eingedrehter Schrauben 18.

Die Brüstungsleiste 2 besteht wiederum zweckmäßigerweise aus Kunststoff mit einem relativ harten, formstabilen Innenteil 7 und einem relativ weichen Außenteil 8.

Eine Schrumpfbremse 9 hält die lineare Ausdehnung der Brüstungsleiste 2 bei Temperaturänderungen klein.

Die Brüstungsleiste 2 übergreift den Holm 1 mit einem horizontal ausgerichteten Schenkel 5 und mit einem vertikal ausgerichteten Schenkel 6. Das weiche Außenteil 8 erstreckt sich über den Schenkel 5 und endet hier mit einer sich an den Fensterscheiben 10 abstützenden Dichtlippe 11 und erstreckt sich über den oberen Teilbereich des Schenkels 6. Über den restlichen Teilbereich des Schenkels 6 bildet das Innenteil 7 gleichzeitig ein Außenteil der Brüstungsleiste 2.

Der Schenkel 6 der Brüstungsleiste 2 weist im Anschluß an den freien Endbereich des Außenteils 8 eine längsdurchlaufende Nut 19 mit einem sich am Holm 1 abstützenden Boden 20 auf. Im Boden 20 ist wiederum eine Schrumpfbremse 9 eingelagert. Vom Boden 20 streben etwa senkrecht Stege 21 ab, die als Stütz- und Klipsstege vorgesehen sind.

Die Längsnut 19 wird durch eine längsdurchlaufende Abdeckprofilleiste 22 überdeckt, die nach Fig. 3 längs einer Längskante über eine als Filmscharnier ausgebildete Schwächungszone 14 am Teil 7 der Brüstungsleiste 2 angebunden ist. Im Anlieferungszustand der Brüstungsleiste 2 kann die Abdeckprofilleiste 22 offenstehen, um nach dem Eindrehen der Schrauben 18 geschlossen zu werden. Im geschlossenen Zustand wird die Abdeckprofilleiste 22 durch einen hakenförmigen Materialansatz 23, der zwischen zwei einander benachbarte Stege 21, die eine hinterschnittene Aufnahmeöffnung für den Materialansatz 23 bilden, gehalten.

Wünscht nun ein Kunde eine dekorative Aufwertung der Brüstungsleiste 2 nach Fig. 3, so kann die Abdeckprofilleiste 22 längs der Schwächungszone 14 eingeschnitten und vom Basisprofil abgerissen werden. Damit wird eine Befestigungsaufnahme für eine Zusatzprofilleiste 16 geschaffen, die im Beispiel nach Fig. 4 winklig ausgebildet ist und den vom Außenteil 8 freigehaltenen Bereich des Innenteils 7 völlig abdeckt. Die Zusatzprofilleiste 16, die, wenn sie aus Kunststoff besteht, eine Schrumpfbremse 9 aufweisen sollte, weist rückseitig angeformte Klipsstege 24 zum Einklipsen in Klipsaufnahmen 25 des Basisprofils auf. Hinsichtlich der dekorativen Gestaltung der Zusatzprofilleiste 16 nach Fig. 4 darf auf die Ausführungen zur Zusatzleiste 16 nach Fig. 2 Bezug genommen werden.

Das Ausführungsbeispiel nach Fig. 4 kann auch das Grundprofil einer von Hause aus zweiteilig ausgebildeten Brüstungsleiste 2 darstellen. In diesem Fall läßt sich eine Dekoränderung oder dekorative Aufwertung der Brüstungsleiste 2 durch einen bloßen Austausch der Zusatzleiste 16 erzielen. Um bei der Anlieferung nicht zwei Teile berücksichtigen zu müssen, ist es dabei denkbar, die Zusatzprofilleiste 16 bei der Anlieferung mit ihrem nach Fig. 4 oberen Klipssteg 24 in die untere Klipsaufnahme 26 vorläufig einzuklipsen und erst nach erfolgter Montage der Brüstungsleiste 2 die endgültige Festlegung vorzunehmen.

## Patentansprüche

1. Brüstungsleiste (2) für den Innenraumbereich von Großraumfahrzeugen, insbesondere Omnibussen, die sich längs eines die untere Begrenzung der Fensteröffnungen des Fahrzeugs bildenden Holms (1) erstreckt und dabei den Holm (1), an dem sie über Haltemittel (4, 18) festgelegt ist, mit einem horizontal ausgerichteten Schenkel (5) und einem vertikal ausgerichteten Schenkel (6) übergreift, dadurch gekennzeichnet, daß einer der Schenkel (5, 6), vornehmlich der vertikal ausgerichtete Schenkel (6), mit einer längs durchlaufenden Schwächungszone (14) ausgebildet und längs dieser Schwächungszone (14) teilbar ist, um ein Entfernen eines Schenkelteilbereichs und den Ersatz dieses Schenkelteilbereichs durch eine Zusatzprofilleiste (16) zu ermöglichen.

2. Brüstungsleiste nach Anspruch 1, dadurch gekennzeichnet, daß die Schwächungszone (14) eine linear verlaufende Materialverjüngung ist.

3. Brüstungsleiste nach Anspruch 1 oder 2, dadurch gekennzeichnet, daß die Schwächungszone (14) ein Filmscharnier ist.

4. Brüstungsleiste nach wenigstens einem der Ansprüche 1 bis 3, dadurch gekennzeichnet, daß die Schwächungszone (14) in einem Schenkelbereich des Schenkels (5, 6) vorgesehen ist, der eine Aufnahme für die Zusatzprofilleiste (16) aufweist.

5. Brüstungsleiste nach wenigstens einem der Ansprüche 1 bis 4, dadurch gekennzeichnet, daß die Aufnahme Klipsausbildungen (25) zum Einklipsen von an der Zusatzprofilleiste (16) angeordneten Klipsstegen (24) aufweist.

6. Brüstungsleiste nach wenigstens einem der Ansprüche 1 bis 5, dadurch gekennzeichnet, daß die Aufnahme aus einer Längsnut (15) besteht, in die die Zusatzprofilleiste (16) mit einem Längsrand eingreift, wobei die Zusatzprofilleiste (16) am anderen Längsrand mittels eines Klettbands (17) festgelegt ist.

7. Brüstungsleiste nach wenigstens einem der Ansprüche 1 bis 6, dadurch gekennzeichnet, daß dieselbe als Kunststoffprofilleiste mit darin eingelagerten schrumpfhindernden Mitteln (9) ausgebildet ist.

8. Brüstungsleiste nach wenigstens einem der Ansprüche 1 bis 7, dadurch gekennzeichnet, daß die Zusatzprofilleiste (16) aus Metall oder Kunststoff besteht und im Falle einer Kunststoffausbildung schrumpf hindernde Mittel (9) aufweist.

9. Brüstungsleiste nach wenigstens einem der Ansprüche 1 bis 8, dadurch gekennzeichnet, daß die Zusatzprofilleiste (16) eine Zierprofilleiste ist.

10. Brüstungsleiste (2) für den Innenraumbereich von Großraumfahrzeugen, insbesondere Omnibussen, die sich längs eines die untere Begrenzung der Fensteröffnungen des Fahrzeugs bildenden Holms (1) erstreckt und dabei den Holm (1), an dem sie über Haltemittel (4, 18) festgelegt ist, mit einem horizontal ausgerichteten Schenkel (5) und einem vertikal ausgerichteten Schenkel (6) übergreift, dadurch gekennzeichnet, daß der vertikal ausgerichtete Schenkel (6) aus einem Grundprofil und einer daran austauschbar angeordneten Zusatzprofilleiste (16) besteht.

## Claims

1. Window-railing strip (2) for the interior region of large-capacity vehicles, in particular buses, which extends along a strut (1) forming the lower boundary of the window openings of the vehicle and in doing so fits with a horizontally aligned limb (5) and a vertically aligned limb (6) over the strut (1) on which the said strip is secured via retaining means (4, 18), characterized in that one of the limbs (5, 6), especially the vertically aligned limb (6), is formed with a weakened zone (14) passing longitudinally through it and can be divided along this weakened zone (14) in order to enable removal of a limb partial region and replacement of this limb partial region by an additional profiled strip (16).

2. Window-railing strip according to Claim 1, characterized in that the weakened zone (14) is a linearly extending tapering of material.

3. Window-railing strip according to Claim 1 or 2, characterized in that the weakened zone (14) is a film hinge.

4. Window-railing strip according to at least one of Claims 1 to 3, characterized in that the weakened zone (14) is provided in a limb region of the limb (5, 6), which region has a holding means for the additional profiled strip (16).

5. Window-railing strip according to at least one of Claims 1 to 4, characterized in that the holding means has clip formations (25) for the clipping-in of clip webs (24) which are arranged on the additional profiled strip (16).

6. Window-railing strip according to at least one of Claims 1 to 5, characterized in that the holding means consists of a longitudinal groove (15) in which the additional profiled strip (16) engages with a longitudinal edge, the additional profiled strip (16) being secured on the other longitudinal edge by means of a touch-and-close fastening (17).

7. Window-railing strip according to at least one of Claims 1 to 6, characterized in that the said strip is designed as a plastic profiled strip having means (9) which are incorporated therein and prevent shrinkage.

8. Window-railing strip according to at least one of Claims 1 to 7, characterized in that the additional profiled strip (16) consists of metal or plastic, and in the case of being formed from plastic, has means (9) which prevent shrinkage.

9. Window-railing strip according to at least one of Claims 1 to 8, characterized in that the additional profiled strip (16) is a decorative profiled strip.

10. Window-railing strip (2) for the interior region of large-capacity vehicles, in particular buses, which extends along a strut (1) forming the lower boundary of the window openings of the vehicle and in doing so fits with a horizontally aligned limb (5) and a vertically aligned limb (6) over the strut (1) on which the said strip is secured via retaining means (4, 18), characterized in that the vertically aligned limb (6) consists of a basic profile and an additional profiled strip (16) arranged exchangeably thereon.

## Revendications

1. Listel d'appui (2) pour l'espace intérieur de véhicules de grande capacité, en particulier d'autobus, qui s'étend le long d'un bras (1) formant la limite inférieure des ouvertures de fenêtre du véhicule et qui, avec une traverse orientée horizontalement (5) et une traverse orientée verticalement (6), recouvre ainsi le bras (1) auquel il est fixé par l'intermédiaire de moyens d'arrêt (4, 18), caractérisé en ce qu'une des traverses (5, 6), surtout la traverse orientée verticalement (6), est conçue avec une zone d'affaiblissement (14) à parcours longitudinal et est divisible le long de cette zone d'affaiblissement (14) pour permettre un enlèvement d'une sous-partie de traverse et le remplacement de cette sous-partie de traverse par un listel de profil supplémentaire (16)

2. Listel d'appui suivant la revendication 1, caractérisé en ce que la zone d'affaiblissement (14) est une dépouille de matériau à course linéaire.

3. Listel d'appui suivant la revendication 1 ou 2, caractérisé en ce que la zone d'affaiblissement (14) est une charnière-film.

4. Listel d'appui suivant au moins l'une des revendications 1 à 3, caractérisé en ce que la zone d'affaiblissement (14) est prévue dans une partie de traverse de la traverse (5, 6), qui présente une entrée pour le listel de profil supplémentaire (16).

5. Listel d'appui suivant au moins l'une des revendications 1 à 4, caractérisé en ce que l'entrée présente des pinces d'arrêt (25) pour emboîter des âmes d'arrêt (24) agencées sur le listel de profil supplémentaire (16).

6. Listel d'appui suivant au moins l'une des revendications 1 à 5, caractérisé en ce que l'entrée est constituée d'une encoche longitudinale (15) dans laquelle s'accroche, avec un bord longitudinal, le listel de profil supplémentaire (16), le listel de profil supplémentaire (16) étant fixé à l'autre bord longitudinal au moyen d'une bande auto-accrochante (17).

7. Listel d'appui suivant au moins l'une des revendications 1 à 6, caractérisé en ce que celui-ci est conçu comme listel de profil en matière plastique avec des moyens empêchant la contraction (9) qui y sont insérés.

8. Listel d'appui suivant au moins l'une des revendications 1 à 7, caractérisé en ce que le listel de profil supplémentaire (16) est constitué de métal ou de matière plastique et présente, dans le cas d'un logement en matière plastique, des moyens empêchant la contraction (9).

9. Listel d'appui suivant au moins l'une des revendications 1 à 8, caractérisé en ce que le listel de profil supplémentaire (16) est un listel de profil décoratif.

10. Listel d'appui (2) pour l'espace intérieur de véhicules de grande capacité, en particulier d'autobus, qui s'étend le long d'un bras (1) formant la limite inférieure des ouvertures de fenêtre du véhicule et qui, avec une traverse orientée horizontalement (5) et une traverse orientée verticalement (6), recouvre ainsi le bras (1) auquel il est fixé par l'intermédiaire de moyens d'arrêt (4, 18), caractérisé en ce que la traverse orientée verticalement (6) est constituée d'un profil de base et d'un listel de profil supplémentaire agencé sur celui-ci de manière à pouvoir être remplacé.
